Europäisches Patentamt

(19) European Patent Office

Office européen des brevets

(11) Veröffentlichungsnummer: **0 012 101**
**B1**

(12) EUROPÄISCHE PATENTSCHRIFT

(45) Veröffentlichungstag der Patentschrift:
**20.07.83**

(21) Anmeldenummer: **79730002.7**

(22) Anmeldetag: **01.11.79**

(51) Int. Cl.³: **B 25 B 29/02**, B 23 P 19/06

(54) Vorrichtung zum Drehen der zylindrischen Muttern mehrerer, auf einem Lochkreis angeordneter Schraubenbolzen zum Verschluss eines Druckgefässes, insbesondere eines Reaktordruckgefässes.

(30) Priorität: **30.11.78 DE 2852105**

(43) Veröffentlichungstag der Anmeldung:
**11.06.80 Patentblatt 80/12**

(45) Bekanntmachung des Hinweises auf die Patenterteilung:
**20.07.83 Patentblatt 83/29**

(84) Benannte Vertragsstaaten:
**CH FR SE**

(56) Entgegenhaltungen:
**DE-A-2 258 859**
**DE-B-1 276 565**
**FR-A-2 387 732**
**US-A-2 736 219**
**US-A-3 162 071**
**US-A-4 020 720**

(73) Patentinhaber: **KRAFTWERK UNION AKTIENGESELLSCHAFT, c/o SIEMENS AG Postfach 261, D-8000 München 22 (DE)**

(72) Erfinder: **Exner, Gerhard, Waltersdorfer Chaussee 41a, D-1000 Berlin 47 (DE)**
Erfinder: **Festinori, Volfango, Hasenheide 58, D-1000 Berlin 61 (DE)**

Vorrichtung zum Drehen der zylindrischen Muttern mehrerer, auf einem Lochkreis angeordneter
Schraubenbolzen zum Verschluss eines Druckgefässes, insbesondere eines Reaktordruckgefässes

Die Erfindung bezieht sich auf eine Vorrichtung zum Drehen der zylindrischen Muttern und/oder Spannmuttern mehrerer, auf einem Lochkreis angeordneter Schraubenbolzen zum Verschluss eines Druckgefässes, insbesondere eines Reaktordruckgefässes, bestehend aus Spannelementen mit gemeinsamen oder getrennten Tragkörpern, die Aussparungen zur Aufnahme der Muttern nebst Schraubenbolzen und Zugbolzen enthalten und an denen gesonderte Drehaggregate, insbesondere in ihrer Drehrichtung umkehrbare Elektromotoren befestigt sind, die jeweils ein Ritzel antreiben, das mit einer Aussenverzahnung auf dem der Mutter und/oder Spannmutter abgewandten Ende einer im Tragkörper gelagerten, den Schrauben- bzw. Zugbolzen umgebenden Antriebsbuchse in Eingriff steht, die über eine formschlüssige, in axialer Richtung auseinanderziehbare Kupplung, von der die eine Kupplungshälfte an der zylindrischen Mutter und die andere Kupplungshälfte an der Antriebsbuchse befestigt ist, das Drehmoment auf die Mutter überträgt.

Eine derartige Vorrichtung ist aus der US-A-3 162 071 bekannt. Bei der bekannten Vorrichtung greift die im Tragkörper gelagerte Antriebsbuchse auf der einen Seite formschlüssig in die zylindrische Mutter, auf der anderen Seite ebenfalls formschlüssig in einen Ring ein, der auf seiner oberen Stirnfläche mit einer Aussenverzahnung versehen ist, die das Ritzel der Drehvorrichtung kämmt. Alle Teile können in axialer Richtung auseinandergezogen werden, da der formschlüssige Eingriff über sich in axialer Richtung erstreckende Ansätze erfolgt, die in entsprechenden Aussparungen am gegenüberstehenden Teil eingreifen. Diese Ansätze sind einteilig zur Antriebshülse. Die in die Mutter eingreifenden Ansätze der Antriebshülle reichen radial nach innen über den Innendurchmesser der Antriebshülse, der angenähert dem Aussendurchmesser der Mutter entspricht, hinaus. Sie greifen in entsprechende, sich vom Aussendurchmesser der Mutter nach innen erstreckende Aussparungen ein, die mit einer grossen Aussenverzahnung der Mutter zu vergleichen sind. Ihre Herstellung ist aufwendig und sie bewirken ausserdem dort eine Schwächung des Querschnittes der Mutter.

Wird durch die bekannte Vorrichtung eine Auf- oder Abwärtsbewegung der Mutter gegenüber dem Schraubenbolzen bewirkt, so muss eine entsprechende Folgebewegung mit dem Tragkörper der Vorrichtung vorgenommen werden, da der Abstand zwischen dem Ritzeleingriff und der Stirnfläche der Mutter durch die konstruktiven Abmessungen der Vorrichtung, insbesondere der Antriebshülse gegeben ist und sich nicht verändern kann. Die Vorrichtung dient deshalb in erster Linie zum Spannen des Schraubenbolzens und zum entsprechenden kurzen Nachstellen der Mutter, nicht zum völligen Auf- oder Abschrauben.

Das Spannen des Schraubenbolzens erfolgt mit Hilfe eines mit dem Schraubenbolzen verbundenen separaten Zugbolzens. Dieser kann aber auch, wie ebenfalls bekannt, jeweils einteilig mit dem Schraubenbolzen, d.h. als Ansatz des Schraubenbolzens, ausgebildet werden.

Eine weitere Vorrichtung zum Drehen der Mutter eines gespannten Schraubenbolzens ist in der US-A-2 736 219 beschrieben. Diese Mutter ist aber nicht zylindrisch ausgebildet, sondern weist einen Aussensechskant auf. Ein entsprechender Innensechskant ist in der Antriebsbuchse vorgesehen, die aus zwei ineinander verschachtelten Teilen besteht. Beide Teile können sich in Längsrichtung gegeneinander bewegen, wobei diese Bewegung allerding nicht grösser sein darf als die Eingriffshöhe beider Teile ineinander. Zwischen beiden Teilen sind Federn angeordnet, welche die beiden Teile auseinanderdrücken, wodurch die Anlage auf der einen Seite am Tragkörper und auf der anderen Seite der Eingriff in die Verzahnung des Antriebsritzels gegeben ist. Sinn dieser Federung innerhalb der Antriebsbuchse ist es, die Vorrichtung vor zu grossen Drehmomenten zu schützen, wie sie erforderlich wären, falls die Mutter auf dem Bolzen festsitzt oder das Antriebsritzel mit einer zu grossen Kraft betätigt wird.

Bei dieser bekannten Vorrichtung fehlt eine Kupplung zwischen der Mutter und der Antriebsbuchse völlig, da die Antriebsbuchse über die Mutter gesteckt wird. Diese Steckverbindung ist nur möglich, wenn Mutter und Innensechskant der Antriebsbuchse genau gegeneinander ausgerichtet sind. Auch dies wird mit Hilfe der Federung zwischen den beiden Teilen der Antriebsbuchse ermöglicht, die ein Drehen der Antriebsbuchse über die Stirnfläche der Mutter möglich machen, bis ein Einrasten der Antriebsbuchse gegeben ist. Die bekannte Vorrichtung ermöglicht aber nur ein Nachschrauben der Mutter nach dem Spannen des Schraubenbolzens und nicht ein Abschrauben der Mutter, da dieser ein entsprechendes Nachführen der Vorrichtung durch Anheben bedingen würde. Dabei besteht aber die Gefahr, dass sich die Verbindung zwischen den beiden ineinander gesteckten Teilen der Antriebsbuchse löst, so dass keine Drehmomentübertragung mehr möglich ist. Die bekannte Vorrichtung unterscheidet sich daher wesentlich sowohl hinsichtlich der Aufgabenstellung als auch hinsichtlich der konstruktiven Merkmale vom Gegenstand der Erfindung.

Eine andere Vorrichtung zum Drehen der zylindrischen Muttern und/oder Spannmuttern mehrerer, auf einem Lochkreis angeordneter Schraubenbolzen zum Verschluss eines Druckgefässes ist aus der DE-A-2 258 859 bekannt. Bei dieser bekannten Vorrichtung wird die auf dem Schraubenbolzen geschraubte zylindrische Spannmutter von dem Ritzel eines Drehaggregates dadurch in Drehung versetzt, dass dieses in die Aussenverzahnung einer Antriebsbuchse eingreift, deren Innenverzahnung mit einer Aussenverzahnung der Mutter in Eingriff steht. Die Antriebsbuchse ist axial und radial im Tragkörper der Vorrichtung gelagert. Eine derartige Aussenverzahnung der Mutter schwächt deren Querschnitt. Ausserdem ist die mit einer Innen- und einer Aussenverzahnung versehene Antriebsbuchse auch schwierig herzustellen.

Ferner ist durch die DE-B-1 276 565 ein Werkzeug zum Spannen eines Bolzens bekannt, das eine Vorrichtung zum Drehen der Spannmutter enthält. Das Drehen der Mutter des gespannten Schraubenbolzens selbst wird per Hand ausgeführt. Zum Drehen der Spannmutter dient ein Ritzel, das in ein Kegelrad eingreift, das seinerseits an einer im Tragkörper des Werkzeuges gelagerten Verbindungshülse befestigt ist. In dieser Verbindungshülse ist weiterhin ein Antriebsrohr in Längsrichtung gleitbar aber nicht drehbar angebracht, das ständig über ein Universalgelenk mit dem oberen Ende der Spannmutter verbunden ist. Das Drehmoment zum Drehen der Spannmutter wird von der Verbindungshülse auf das Rohr mit Hilfe des Stiftes übertragen, das gleitend in eine Längsnut der Verbindungshülse eingreift. Dadurch ist eine Längsverschiebung des Rohres beim Drehen der Spannmutter gegenüber der Verbindungshülse möglich. Da aber die Verbindung zwischen dem Rohr und der Spannmutter unveränderlich ist, bleibt die gegenseitige Lage beider Teile zueinander stets erhalten. Es ist lediglich eine gewisse Beweglichkeit der Spannmutter zum vereinfachten Auffädeln auf das Gewinde des Bolzens durch das Universalgelenk gegeben. Eine in Längsrichtung auseinanderziehbare Kupplung ist mithin zwischen dem Antriebsteil und der Spannmutter nicht vorgesehen.

Der Erfindung liegt die Aufgabe zugrunde, eine Vorrichtung der eingangs beschriebenen Art einfach und raumsparend so auszubilden, dass die Drehmomentübertragung entlang des gesamten Umfanges der zylindrischen Mutter bzw. Spannmutter ohne die Verwendung einer Aussenverzahnung an der Mutter ermöglicht ist und dass das Aufdrehen und Abdrehen der Mutter ohne Verlagerung der Vorrichtung in einem Arbeitsgang durchgeführt werden kann.

Zur Lösung dieser Aufgabe ist bei einer Vorrichtung der eingangs beschriebenen Art gemäss der Erfindung der Aussendurchmesser der Antriebsbuchse kleiner als der Innendurchmesser der zylindrischen Mutter und/oder Spannmutter, derart, dass sich die Mutter und/oder Spannmutter über die Antriebsbuchse schieben kann, und die von der Antriebsbuchse getragene andere Kupplungshälfte ist auf der Antriebsbuchse, gegen Verdrehung gesichert, längsbeweglich angeordnet und die Antriebsbuchse ist ihrerseits auf dem Zugbolzen geführt.

Eine derartige Vorrichtung hat den Vorteil einfach ausgebildeter Teile. Die Mutter und/oder Spannmutter ist also in an sich bekannter Weise ein zylindrischer Körper ohne Aussenverzahnung. Die Antriebsbuchse ist ebenfalls ein zylindrischer Körper, der auf dem Zugbolzen geführt ist, so dass sich die Vorrichtung beim Aufsetzen selbst zentriert. Der Zugbolzen kann auch einteilig mit dem Schraubenbolzen ausgebildet sein. Zur Verbindung der Antriebsbuchse und der Mutter dient eine formschlüssige Kupplung, von denen jeweils eine Kupplungshälfte an der Antriebsbuchse und die andere Kupplungshälfte an der Mutter befestigt ist, und die, wenn sie in axialer Richtung ineinander geschoben sind, unabhängig von der Drehrichtung das Drehmoment übertragen. Da die mit der Antriebsbuchse verbundene Kupplungshälfte auf dieser längsbeweglich angeordnet ist und der Aussendurchmesser der Antriebsbuchse kleiner als der Innendurchmesser der zylindrischen Mutter ist, derart, dass sich die Mutter und/oder Spannmutter in Längsrichtung über die Antriebsbuchse schieben kann, ergibt sich noch der Vorteil, dass für das Abdrehen der Mutter und/oder Spannmutter von dem Gewinde des Schrauben- bzw. Zugbolzens keine zusätzliche Höhe des Tragkörpers vorgesehen sein muss. Die Mutter und/oder Spannmutter kann daher in einem Arbeitsgang auf- oder abgeschraubt werden.

Es ist ferner vorteilhaft, wenn die mit der Mutter und/oder Spannmutter verbundene Kupplungshälfte auf der radial aussenliegenden Oberfläche ein Gewinde trägt, das bei Endlage der von dem Schrauben- bzw. Zugbolzen abgeschraubten Mutter und/oder Spannmutter mit einem Gegengewinde in Eingriff steht, das auf der Innenseite eines im Tragkörper lose angeordneten Ringes liegt. Dadurch ergibt sich in einfachster Weise eine Transportsicherung der von dem Gewinde des Schrauben- bzw. Zugbolzens abgeschraubten Mutter und/oder Spannmutter, die möglich ist, weil sich die Mutter und/oder Spannmutter über die Antriebsbuchse schiebt, so dass ihre radial aussenliegende Oberfläche der Innenfläche des Tragkörpers gegenübersteht. Ein Herausfallen der Muttern aus der Vorrichtung, wenn diese transportiert wird, ist somit verhindert.

Zur Ausbildung der formschlüssigen Drehmomente übertragenden Kupplung ist es besonders zweckmässig, wenn die von der Antriebsbuchse getragene Kupplungshälfte radial innenliegende Mitnehmerarme aufweist, die in Längsnuten der Antriebsbuchse eingreifen. Diese Mitnehmerarme sichern die Kupplungshälfte gegen Verdrehung, so dass das Drehmoment übertragen wird, und lassen gleichzeitig durch ihr Eingreifen in Längsnuten die Längsbewegung der Kupplungshälfte gegenüber der Antriebsbuchse zu. Zur Verringerung der Reibungskräfte ist es ferner vorteilhaft, die Mitnehmerarme mit Wälzkörpern zu versehen.

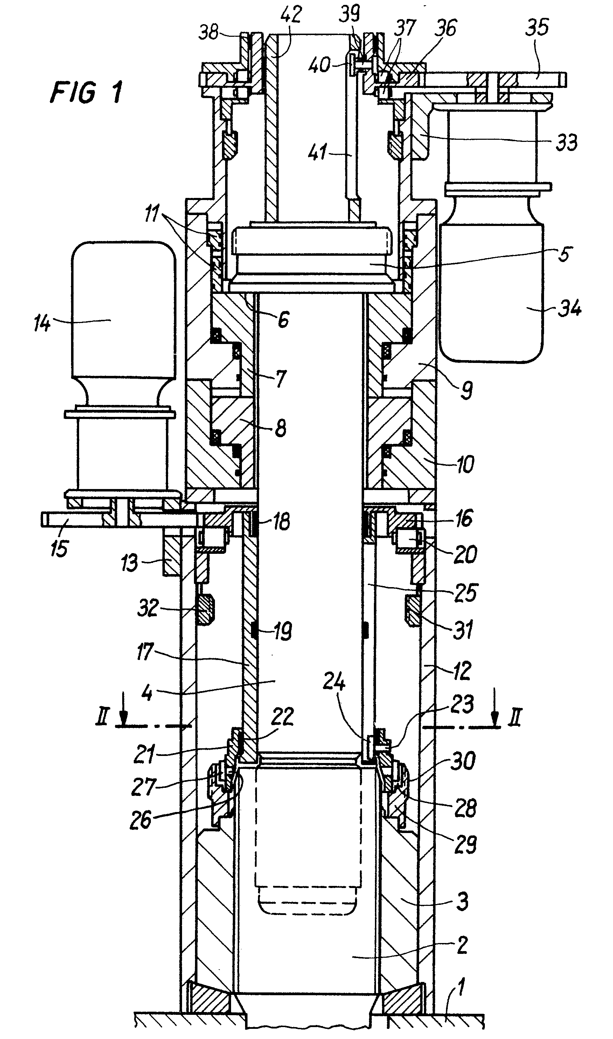

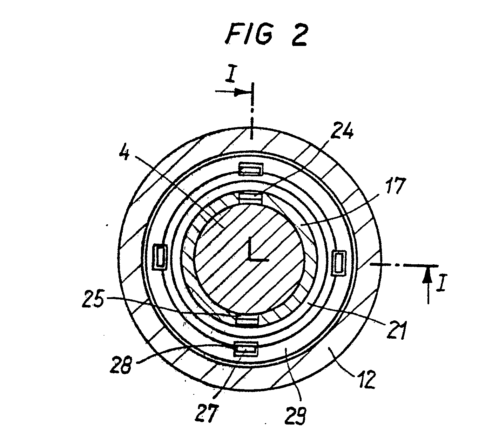

Im folgenden sei die Erfindung noch anhand des in den Fig. 1 und 2 dargestellten Ausführungsbeispiels näher erläutert. Fig. 1 zeigt einen Längsschnitt durch eine gemäss der Erfindung ausgebildete Vorrichtung zum Drehen der Muttern und/oder Spannmuttern mehrerer, auf einem Lochkreis angeordneter Schraubenbolzen zum Verschluss eines Druckgefässes entlang der Linien I–I in Fig. 2, Fig. 2 zeigt einen Querschnitt entlang der Linien II–II in Fig. 1.

Zum Verschliessen und Öffnen des Deckels 1, z.B. eines Reaktordruckgefässes oder eines Kessels, dienen eine Vielzahl von auf einem Lochkreis angeordneten Schraubenbolzen 2, deren Mutter 3, bestehend aus einem Stahlzylinder mit einem Innengewinde, unter Verwendung einer Vorrichtung automatisch auf den Schraubenbolzen 2 auf- und abgeschraubt werden. Diese Vorrichtung dient gleichzeitig zum Spannen der Schraubenbolzen 2, um auf diese eine Vorspannung aufzubringen, damit der Deckel 1 gegen eine Auflage des Druckgefässes gepresst wird. Zu diesem Zweck ist in dem Schraubenbolzen 2 ein Zugbolzen 4 eingeschraubt, der die Vorrichtung durchsetzt und am oberen Ende einen Ansatz 5 aufweist, welcher die Angriffsfläche 6 für die hydraulisch betätigten Hubkolben 7 und 8 bildet. Die Hubkolben 7 und 8 umgeben jeweils den Zugbolzen 4 und liegen übereinander in entsprechenden Hubzylindern 9 und 10. Sie werden durch Rückholkolben 11 jeweils wieder in ihre Ausgangslage gebracht.

Tragendes Element der Vorrichtung ist ein Tragkörper 12, der Aussparungen enthält, welche jeweils den Schraubenbolzen 2, den Zugbolzen 4 und die Mutter 3 aufnehmen. Am Tragkörper 12 ist ausserdem mit Hilfe eines Winkelstückes 13 der Elektromotor 14 befestigt, der zum Antrieb der Mutter 3 in beiden Drehrichtungen dient.

Zur Übertragung des Drehmomentes von dem Elektromotor 14 auf die Mutter 3 steht das Ritzel 15 in Eingriff mit einem zweiten Zahnrad 16, das am oberen Ende der Antriebsbuchse 17 befestigt ist und zusammen mit dieser den Zugbolzen 2 umgibt. Anstelle eines getrennten Zahnrades, das mit der Antriebsbuchse verbunden ist, könnte auch die Antriebsbuchse selbst eine Aussenverzahnung tragen, jedoch ist die Fertigung von zwei geteilten und danach zu verbindenden Teilen einfacher. Die Antriebsbuchse 17 zusammen mit dem zweiten Zahnrad 16 ist auf dem Zugbolzen 4 durch die Lauflager 18 und 19 geführt, so dass sich beim Aufsetzen der Vorrichtung eine Zentrierung ergibt. Ausserdem ist die Antriebsbuchse 17 mit dem Zahnrad 16 axial über Nadellager 20 im Tragkörper 12 gelagert.

Am unteren, der Mutter 3 zugewandten Ende der Antriebsbuchse 17 trägt diese eine Kupplungshälfte 21, die zur Aussenfläche der Antriebsbuchse 17 eine Bronzeführung 22 aufweist. Die Kupplungshälfte 21 hat radial innenliegende Mitnehmerarme 23, die jeweils einen Wälzkörper 24 tragen, und in Längsnuten 25 der Antriebsbuchse 17 eingreifen. Ähnliche Mitnehmerarme 26 mit einem Wälzkörper 27 sind auch radial aussenliegend an der Kupplungshälfte 21 angeordnet und greifen in entsprechende Nuten 28 in der zweiten Kupplungshälfte 29 ein, die ihrerseits an der Mutter 3 befestigt ist. Es sind aus der Zeichnung nicht ersichtliche Führungsflächen in Form von schiefen Ebenen vorgesehen, die das Einrasten der Mitnehmerarme 26 in den Nuten 28 beim Aufsetzen der Vorrichtung erleichtern. Beide Kupplungshälften 21 und 29 bilden somit eine formschlüssige, Drehmomente unabhängig von der Drehrichtung übertragende Kupplung, die in axialer Richtung auseinander gezogen bzw. ineinander geschoben werden können. Das Drehmoment des Elektromotors 14 wird somit über das Ritzel 15, das Zahnrad 16, die Antriebsbuchse 17 und die Kupplungshälfte 21 und 29 auf die Mutter 3 übertragen.

Während des Abschraubens der Mutter 3 von dem Schraubenbolzen 2 gleiten die Mitnehmerarme 23 der Kupplungshälfte 21 in den Längsnuten 25 der Antriebsbuchse 17 nach oben, zusammen mit der anderen Kupplungshälfte 29 und der Mutter 3. Auf der radial aussenliegenden Oberfläche der Kupplungshälfte 29 ist ein Gewinde 30 angeordnet, das bei Endlage der Mutter 3 mit einem Gegengewinde 31 in Eingriff steht, das auf der Innenseite eines im Tragkörper 12 lose angeordneten Ringes 32 liegt. Dadurch wird die Mutter 3 mit der mit ihr verbundenen Kupplungshälfte 29 während des Transportes der Vorrichtung gegen ein Herausfallen gesichert. Ausserdem ist durch diese Transportsicherung auch eine Erleichterung des Auffädelns der Mutter 3 auf das Gewinde des Schraubenbolzens 2 gegeben, da die Gewinde der Transportsicherung noch in Eingriff stehen, wenn die Mutter 3 bereits sich auf die ersten Windungen des Schraubenbolzens 2 auffädelt.

Die vorstehend beschriebene Anordnung zum Drehen der Mutter 3 des Schraubenbolzens 2 kann ebenfalls zum Drehen einer Spannmutter verwendet werden, die auf einem oberen Ansatz des Schraubenbolzens oder auf einem Zugbolzen aufgeschraubt wird, um ein direktes Aufbringen einer Vorspannung auf den Schraubenbolzen zu ermöglichen.

Bei dem dargestellten Ausführungsbeispiel wird der Schraubenbolzen 2 jedoch mit Hilfe des Zugbolzens 4 gelängt, der in dem Schraubenbolzen 2 eingeschraubt ist. Zum Drehen dieses Zugbolzens 4 dient ebenfalls ein seitlich über einen Winkelhebel 33 am Tragkörper 12 befestigter Elektromotor 34, dessen Ritzel 35 mit einem Zahnrad 36 in Eingriff steht, das über Wälzlager 37 im Tragkörper 12 axial und über Lager 38 radial gelagert ist. Das Zahnrad 36 weist innenliegende Mitnehmerarme 39 mit Wälzkörpern 40 auf, die in eine Längsnut 41 der Antriebshülse 42, die am Zugbolzen 4 befestigt ist, eingreifen. Die Antriebshülse 42 überträgt somit das Drehmoment direkt auf den Zugbolzen 4.

**Patentansprüche**

1. Vorrichtung zum Drehen der zylindrischen Muttern (3) und/oder Spannmuttern mehrerer, auf einem Lochkreis angeordneter Schraubenbolzen (2) zum Verschluss eines Druckgefässes, insbesondere eines Reaktordruckgefässes, bestehend aus Spannelementen (7, 8, 9, 10) mit gemeinsamen oder getrennten Tragkörpern (12), die Aussparungen zur Aufnahme der Muttern (3) nebst Schraubenbolzen (2) und Zugbolzen (4) enthalten und an denen gesonderte Drehaggregate (14), insbesondere in ihrer Drehrichtung umkehrbare Elektromotoren befestigt sind, die jeweils ein Ritzel (15) antreiben, das mit einer Aussenverzahnung auf dem der Mutter (3) und/oder Spannmutter abgewandten Ende einer im Tragkörper (12) gelagerten, den Zugbolzen (4) umgebenden Antriebsbuchse (17) in Eingriff steht, die über eine formschlüssige, in axialer Richtung auseinanderziehbare Kupplung, von der die eine Kupplungshälfte (29) an der zylindrischen Mutter (3) und die andere Kupplungshälfte (21) an der Antriebsbuchse (17) befestigt ist, das Drehmoment auf die Mutter (3) überträgt, dadurch gekennzeichnet, dass der Aussendurchmesser der Antriebsbuchse (17) kleiner als der Innendurchmesser der zylindrischen Mutter (3) und/oder Spannmutter ist derart, dass sich die Mutter (3) und/oder Spannmutter über die Antriebsbuchse (17) schieben kann, dass die von der Antriebsbuchse (17) getragene andere Kupplungshälfte (21) auf der Antriebsbuchse (17), gegen Verdrehung gesichert, längsbeweglich angeordnet ist und dass die Antriebsbuchse (17) ihrerseits auf dem Zugbolzen (4) geführt ist.

2. Vorrichtung nach Anspruch 1, dadurch gekennzeichnet, dass die andere Kupplungshälfte (21) radial innenliegende Mitnehmerarme (23) aufweist, die in Längsnuten (25) der Antriebsbuchse (17) eingreifen.

3. Vorrichtung nach Anspruch 1 oder 2, dadurch gekennzeichnet, dass die andere Kupplungshälfte (21) radial aussenliegende Mitnehmerarme (26) aufweist, die in Nuten (28) der mit der Mutter (3) und/oder Spannmutter verbundenen Kupplungshälfte (29) eingreifen.

4. Vorrichtung nach Anspruch 2 oder 3, dadurch gekennzeichnet, dass die Mitnehmerarme (23, 26) Wälzkörper (24, 27) tragen.

5. Vorrichtung nach Anspruch 1, dadurch gekennzeichnet, dass an der einen Stirnfläche der Antriebsbuchse (17) ein Zahnrad (16) befestigt ist, das mit dem Ritzel (15) in Eingriff steht.

6. Vorrichtung nach Anspruch 1, dadurch gekennzeichnet, dass die mit der Mutter (3) und/oder Spannmutter verbundene Kupplungshälfte (29) auf der radial aussenliegenden Oberfläche ein Gewinde (30) trägt, das bei Endlage der von dem Schrauben- (2) bzw. Zugbolzen (4) abgeschraubten Mutter (3) und/oder Spannmutter mit einem Gegengewinde (31) in Eingriff steht, das auf der Innenseite eines im Tragkörper (12) lose angeordneten Ringes (32) liegt.

**Claims**

1. Device for rotating the cylindrical nuts (3) and/or tightening nuts of a plurality of screw bolts (2) which are arranged in a bolt circle, for sealing a pressure vessel, in particular a reactor pressure vessel, composed of tightening elements (7, 8, 9, 10) with common or separate carrier bodies (12) which contain recesses for the accommodation of the nuts (3) together with the screw bolts (2) and tension bolts (4) and to which are attached special rotation units (14), in particular electric motors which are reversible in respect of their rotation direction and each of which drives a pinion (15) which engages with an outer toothing at the end, facing away from the nut (3) and/or tightening nut, of a drive bush (17) which is mounted in the carrier body (12), surrounds the tension bolt (4) and transfers the torque to the nut (3) via a shape-locking coupling which is expansible in the axial direction and by which one of the coupling halves (29) is attached to the cylindrical nut (3) and the other of the coupling halves (21) is attached to the drive bush (17), characterised in that the outer diameter of the drive bush (17) is smaller than the inner diameter of the cylindrical nut (3) and/or the tightening nut in such a way that the nut (3) and/or tightening nut can be pushed over the drive bush (17), that the other coupling half (21) which is carried by the drive bush (17) is arranged on the drive bush (17) so as to be longitudinally movable and secured against rotation, and that the drive bush (17) is itself guided by the tension bolt (4).

2. Device as claimed in claim 1, characterised in that the other coupling half (21) has radial, internal drive arms (23) which engage in longitudinal grooves (25) in the drive bush (17).

3. Device as claimed in claim 1 or 2, characterised in that the other coupling half (21) has radial external drive arms (26) which engage in grooves (28) in the coupling half (29) which is connected to the nut (3) and/or tightening nut.

4. Device as claimed in claim 2 or 3, characterised in that the drive arms (23, 26) carry roller bodies (24, 27).

5. Device as claimed in claim 1, characterised in that a gear wheel (16) which engages with the pinion (15) is attached to one end surface of the drive bush (17).

6. Device as claimed in claim 1, characterised in that the coupling half (29) which is connected to the nut (3) and/or tightening nut bears, on the radial external surface, a thread (30) which, when the nut (3) and/or tightening nut, which has been unscrewed from the screw bolt (2) or tension bolt (4), occupies its end position, engages with a counter-thread (31) which is present on the inside of a ring (32) which is movably arranged in the carrier body (12).

**Revendications**

1. Dispositif pour entraîner en rotation des écrous cylindriques (3) et/ou des écrous de serrage de plusieurs boulons (2) disposés sur un cercle de trous en vue de fermer une cuve sous pression, en particulier une cuve de réacteur sous pression, constitué par des éléments de serrage (7, 8, 9, 10) avec des corps de support (12) communs ou séparés qui comportent des évidements pour recevoir les écrous (3) de même que les boulons (2) et des boulons d'assemblage (4), et auxquels sont fixés les agrégats de rotation particuliers (14), notamment des moteurs électriques à sens de rotation inversible, dont chacun entraîne un pignon (15) qui engrène avec une denture extérieure prévue à l'extrémité, éloignée de l'écrou (3) ou de l'écrou de serrage, d'une douille d'entraînement (17) qui est montée dans le corps de support (12) qui entoure le boulon d'assemblage (4) et qui transmet le couple de rotation à l'écrou (3), par l'intermédiaire d'un accouplement à transmission de forces, dégageable en direction axiale et dont une moitié (29) de l'accouplement est fixée à l'écrou cylindrique (3) et l'autre moitié (21) de l'accouplement est fixée à la douille d'entraînement (17), caractérisé par le fait que le diamètre extérieur de la douille d'entraînement (17) est inférieur au diamètre intérieur de l'écrou cylindrique (3) et/ou de l'écrou de serrage de manière que l'écrou (3) et/ou l'écrou de serrage puisse se glisser sur la douille d'entraînement (17) que l'autre moitié (21) de l'accouplement porté par la douille d'entraînement (17) puisse se déplacer longitudinalement sur cette dernière sans pouvoir tourner, et que la douille d'entraînement (17) est, à son tour, guidée sur le boulon d'assemblage (4).

2. Dispositif selon la revendication 1, caractérisé par le fait que la seconde moitié (21) de l'accouplement comporte des doigts d'entraînement (23) radiaux et se situant vers l'intérieur, doigts d'entraînement qui pénètrent dans des gorges longitudinales (25) de la douille d'entraînement (17).

3. Dispositif selon la revendication 1 ou 2, caractérisé par le fait que l'autre moitié (21) de l'accouplement comporte des doigts d'entraînement (26) situés radialement vers l'extérieur et qui pénètrent dans des gorges (28) de la moitié d'accouplement (29) qui est reliée à l'écrou (3) et/ou à l'écrou de serrage.

4. Dispositif selon la revendication 2 ou 3, caractérisé par le fait que les doigts d'entraînement (23, 26) portent des corps de roulement (24, 27).

5. Dispositif selon la revendication 1, caractérisé par le fait qu'à l'une des faces frontales de la douille d'entraînement (17) est fixée une roue dentée (16) qui engrène avec le pignon (15).

6. Dispositif selon la revendication 1, caractérisé par le fait que la moitié (29) de l'accouplement qui est reliée à l'écrou (3) et/ou à l'écrou de serrage, porte, sur la surface radialement extérieure, un filetage (30) qui, dans la position d'extrémité de l'écrou (3) et/ou de l'écrou de serrage dévissé du boulon (2) ou du boulon d'assemblage (4), engrène avec un filetage antagoniste (31) prévu sur le côté inférieur d'un anneau (32) qui est disposé librement dans le corps de support (12).

FIG 1

0 012 101

7

# FIG 2